Europäisches Patentamt

European Patent Office

Office européen des brevets

(11) Publication number: **0 238 140**
A2

# EUROPEAN PATENT APPLICATION

(21) Application number: 87200468.4

(22) Date of filing: 12.03.87

(51) Int. Cl.³: **C 08 L 67/02**
C 08 K 5/00

(30) Priority: 19.03.86 JP 61749/86
11.06.86 JP 135523/86

(43) Date of publication of application:
23.09.87 Bulletin 87/39

(84) Designated Contracting States:
AT BE CH DE ES FR GB GR IT LI LU NL SE

(71) Applicant: AKZO N.V.
Velperweg 76
NL-6824 BM Arnhem(NL)

(72) Inventor: Kakida, Hideto
B-1012 133-1, Higashikibougaoko
Asahi-ku Kanagawa-ken(JP)

(72) Inventor: Musha, Morita
39-5-405, 5040, Yamaguchi
Tokorozawa-shi Saitama-ken(JP)

(74) Representative: Sieders, René et al,
P.O. Box 314
NL-6800 AH Arnhem(NL)

(54) Polyester resin composition with excellent heat resistance.

(57) Disclosed herein is a polyester resin composition comprising (A) a crystalline polyester resin, (B) a hindered phenolic antioxidant and (C) at least one antioxidant selected from phosphorus-containing antioxidants and sulfur-containing antioxidants. The polyester resin composition is particularly excellent in heat resistance. Its toughness and abrasion and wearing resistance are also superb.

EP 0 238 140 A2

## Title of the Invention

Polyester Resin Composition

with Excellent Heat Resistance


## Background of the Invention

### 1. Field of the Invention:

This invention relates to a polyester resin composition excellent in heat resistance, toughness, stability in processing steps and abrasion and wearing resistance, and more specifically to a polyester resin composition suitable for various applications where high heat resistance is required, such as ovenable trays, heat-resistant tubular structures, heating tools and appliances and electronic parts.

### 2. Description of the Prior Art:

Crystalline polyester resins containing ethylene terephthalate or butylene terephthalate as a principal component are widely employed as fibers, films and engineering plastics. In recent years, their application field has expanded to food packages such as soy sauce bottles, carbonated beverage bottles and alcoholic beverage bottles by making use of their excellent properties such as gas barrier property and solvent resistance as well as to cosmetic containers by relying upon their good fragrance-holding property and good gloss. In addition, there have been more and more cases where they are employed as base polymers for composite materials.

There is also a very recent move to use crystalline polyester resins as engineering plastics for high temperature applications such as ovenable trays, exterior members for heating tools or appliances and electrical parts by making use of their high melting points. There is also another move to use crystalline polyester resins for heat-resistant tubular structures. In short, there is a trend to use crystallized polyesters as heat-resistant materials.

Although such conventional polyester resin compositions can provide high heat resistance, their use involves a problem that, when exposed repeatedly to temperatures exceeding 200°C, they become hard and brittle and as a consequence, are readily broken even by light impacts.

As a reason for the above problem, it seems that when a formed or molded article crystallized in a low-stretched state is exposed repeatedly to high temperatures, the degree of its crystallization increases significantly and its spherulites become larger, and as a result, it becomes harder and its spherulite inter-surfaces act as points of lattice defect to render it brittle.

Polyethylene terephthalate has a glass transition point as low as about 70°C and the upper limit of its heat resistance is its glass transition point of about 70°C when it is in an amorphous or low-crystallized state. It is however fortunate that the apparent glass transition point of polyethylene terephthalate tends to become higher as the degree of its crystallization increases. It is hence possible to improve its heat resistance significantly by increasing the degree of its crystallization. In addition, the melting point of polyethylene terephthalate is at a high temperature exceeding 250°C. In the case of polyethylene terephthalate having a high degree of crystallization, the upper limit of its heat resistance can be considered to reside near its melting point. Therefore, polyethylene terephthalate has a potential to exhibit extremely high heat resistance among general-purpose plastics.

However, polyethylene terephthalate has an considerably low crystallization velocity compared with other crystalline polymers such as polyethylene, polypropylene, polybutylene terephthalate and nylon. It is therefore difficult to design an efficient and economical process for imparting high crystallinity to formed or molded articles.

For articles having simple one- or two- dimensional, elongated or thin, and continuous configurations like fibers or films, polyethylene terephthalate has already found actual utility because such articles can readily retain their configurations and the lengths of their crystallization steps can be set as desired.

In the case of articles having three-dimensional and non-continuous configurations like injection-molded articles and blow-molded articles or those having continuous but complex three-dimensional configurations like tubular structures, it is difficult to maintain their configurations and dimensions. For such articles, it is therefore necessary that their crystallization steps be as short as possible. For this purpose, it is required to increase the crystallization velocity of polyethylene terephthalate.

Polyethylene terephthalate tends to stick to metals when it is in a molten state. It is thus accompanied by an inconvenience that when injection-molded, its mold release property is poor and, in the case of tubular structures and the like, its sizing-step workability is insufficient upon extrusion.

When a crystallized heat-resistant molded article has been obtained, it may be used for a long period of time at elevated temperatures above 150°C, in some instances, over 200°C in view of the melting point of polyethylene terephthalate. In the course of such an application, the spherulites may grow to larger sizes and the molecular weight may become lower. As a result, the molded article becomes brittle. Coloration is another serious problem at such elevated temperatures.

The potential high heat resistance of polyethylene terephthalate base resins cannot actually be exhibited unless the above-described three serious problems are solved.

The present inventors carried out extensive research with a view toward improving the above-mentioned drawbacks of crystalline polyester resins and hence expanding their application as heat-resistant materials. As a result, it has been found that a high degree of crystallinity can be imparted even in an unstretched state, that heat resistance (especially, inhibition of embrittlement and coloration at elevated temperatures over 250°C) can be improved significantly and that flexibility and toughness can be retained by adding (B) a hindered phenolic antioxidant and (C) at least one antioxidant selected from phosphorus-containing antioxidants and sulfur-containing antioxidants, in combination, to a crystalline polyester resin (A), and that crystallized heat-resistant injection-molded articles or extruded articles of three-dimensional configurations such as tubular structures can be easily obtained by further adding a nucleating agent, a crystallization accelerator and a mold release agent in specific amounts to the polyester resin.

## Summary of the Invention

An object of this invention is to provide a polyester resin composition having excellent heat resistance, toughness and abrasion and wearing resistance.

Another object of this invention is to provide a polyester resin composition having superb processing-step workability upon forming or molding.

In one aspect of this invention, there is thus provided a polyester resin composition with excellent heat resistance, which comprises (A) a crystalline polyester resin, (B) a hindered phenolic antioxidant and (C) at least one antioxidant selected from phosphorus-containing antioxidants and sulfur-containing antioxidants.

It is preferable that this polyester resin composition further contain a nucleating agent, a crystallization accelerator and a mold release agent in amounts of 0.05-3 parts by weight, 0.01-5 parts by weight and 0.01-5 parts by weight, respectively, based on 100 parts by weight of crystalline polyester resin (A).

## Description of the Preferred Embodiments

The crystalline polyester resin (A) useful in the practice of this invention may be a homopolymer, or a copolymer or polymer blend so long as the characteristic properties of the crystalline polyester are not impaired.

As homopolymers, polyethylene terephthalate and polybutylene terephthalate are mentioned as typical examples. Illustrative copolymers include copolymers comprising the above homopolymers, and conventionally-known acid components and glycol components. As specific examples of such acid components and glycol components, may be mentioned acid components such as phthalic acid, isophthalic acid, adipic acid, sebacic acid, naphthalene-1,4- or 2,6-dicarboxylic acid and diphenyl ether-4,4'-dicarboxylic acid; glycol components such as propylene glycol, butylene glycol, neopentyl glycol, cyclohexane dimethanol and 2,2-bis(4-hydroxyphenyl)propane; and oxy acids such as p-hydroxybenzoic acid and p-hydroxyethoxybenzoic acid. The above resin can be obtained by an ordinary polymerization process, for example, by polycondensating terephthalic acid and ethylene glycol through an ester interchange reaction or a direct esterification reaction. Upon production of the resin, it is preferable to control the intrinsic viscosity [η] of the resin within a range of 0.4 - 1.4. As a process for obtaining a resin with a high intrinsic viscosity, it is possible to apply an ordinary solid-phase polymerization process to a resin having a relatively low intrinsic viscosity.

In the present invention, it is essential that the above polyester resin (A) be added with a mixture of the phenolic antioxidant (B) and at least one antioxidant (C) selected from phosphorus-containing antioxidants and sulfur-containing antioxidants. Single use of the phenolic antioxidant (B) cannot achieve sufficient improvement to the heat resistance and tends to cause coloration of the resin composition at elevated temperatures. On the other hand, use of the antioxidant (C) alone fails to bring about any appreciable improvement to the heat resistance. Although the antioxidant (B) and the antioxidant (C) may be added at any desired ratio in accordance with the intended application of the resulting resin composition, excellent flexibility and toughness can still be retained even after repeated exposure to high temperatures over 200°C provided that the ratio (B/C) of the antioxidant (B) to the antioxidant (C) ranges from 1/50 to 50/1, preferably from 1/10 to 10/1. The above-mentioned mixture of the antioxidants (B) and (C) may be added in any desired amount to the polyester resin in accordance with the intended application of the resulting resin composition. However, the mixture may be added, preferably in an amount of 0.01 - 5 parts by weight, more preferably in an amount of 0.05 - 1.0 part by weight, most preferably in an amount of 0.1 - 0.5 part by weight, based on 100 parts by weight of the crystalline polyester resin. Any amounts greater than 5 parts by weight may result in such inconvenience that roll surfaces are smeared upon production of sheets, mold surfaces are smeared upon injection molding, and workability is reduced.

The phenolic antioxidant (A) useful in the practice of this invention is a hindered phenolic compound in which a bulky group is contained at a position ortho to the -OH group of the phenolic compound so that the properties of the phenolic -OH group is hindered. Specific examples of the hindered phenolic compound include 2,2'-methylenebis(4-methyl-6-t-butylphenol), 4,4'-butylidene-bis(3-methyl-6-t-butylphenol), 4,4'-thiobis-(3-methyl-6-t-butylphenol), tetrakis[methylene-3-(4'-hydroxy-3',5'-di-t-butylphenyl)propionate]methane, n-octadecyl 3-(4'-hydroxy-3',5'-di-t-butylphenyl)propionate, 2,4-bisoctylthio-6-(4'-hydroxy-3',5'-di-t-butylanilino)-1,3,5-triazine, 1,3,5-tris(4'-hydroxy-3',5'-di-t-butylbenzyl)-1,3,5-triazine-2,4,6(1H,3H,5H)-trione, 1,3,5-tris(3'-hydroxy-2',6'-dimethyl-4'-t-butylbenzyl)-1,3,5-triazine-2,4,6(1H,3H,5H)-trion, and 1,3,5-trimethyl-2,4,6-tris(4'-hydroxy-3',5'-di-t-butylbenzyl)benzene. These phenolic antioxidants may be used alone or in combination.

As a phosphorus-containing antioxidant which constitutes one type of the antioxidant (C) may be mentioned a phosphorus-containing compound such as phosphorous ester, phosphonite or phosphophenanthrene.

Specific examples include dioctadecyl pentaerythrityl diphosphite, trioctadecyl phosphite, tris(nonylphenyl) phosphite, tris(2,4-di-t-butylphenyl) phosphite, 9,10-dihydro-9-oxa-10-phosphaphenanthrene-10-oxide, and tetrakis(2,4-di-t-butylphenyl)-4,4'-biphenylene diphosphonite. These phosphorus-containing antioxidants may be used alone or in combination.

As a sulfur-containing antioxidant which constitutes the other type of the antioxidant (C), may be mentioned a thiol, sulfide or the like. Illustrative examples of the sulfur-containing antioxidant include 3,3'-thiodipropionic acid, didodecyl-3,3'-thiodipropionate, pentaerythrityl tetrakis(3-dodecyl-thiopropionate), and pentaerythrityl tetrakis(3-octadecyl-thiopropionate). These sulfer-containing antioxidants may be used alone or in combination.

In view of high forming or molding temperatures of polyesters, it is preferable to use those having greater molecular weights and lower vapor pressures as the antioxidants (B) and (C).

Where high impact resistance is required especially in a low-temperature atmosphere, it is possible to use a crystalline polyester resin with a polyolefin incorporated therein in the present invention. As to the amount of the polyolefin incorporated, it is preferable to contain it in an amount of 1 - 20 wt.% in the crystalline polyester resin in order not to reduce the characteristic properties of the crystalline polyester resin.

As specific examples of the polyolefin, may be employed those commonly available on the market, such as polyethylene, copolymers of ethylene and $\alpha$-olefins, polypropylene, polymethylpentene, and other polyolefin copolymers.

No particular limitation is imposed on the nucleating agent to be used in the present invention and conventionally-known nucleating agents can be used. Conventionally-known nucleating agents include talc, magnesium oxide, zinc oxide, magnesium silicate, sodium stearate, barium stearate, potassium benzoate, sodium terephthalate, sodium monomethylterephthalate, sodium monomethylisophthalate, sodium benzoate, sodium orthochlorobenzoate, and azelaic acid. It is preferable to add such a nucleating agent in an amount of 0.05 - 3 parts by weight based on 100 parts by weight of the crystalline polyester. Any amounts smaller than the lower limit tend to reduce its effects as a nucleating agent. On the other hand, any amounts greater than the upper limit may lower the mechanical properties of the resulting composition.

No particular limitation is imposed on the crystallization accelerator to be used in the present invention and conventionally-known crystallization accelerators can be used. Exemplary crystallization accelerators include salts of montanic acid, which are formed of montanic acid and metals such as lithium, sodium, potassium, magnesium, calcium and aluminum; salts of montanic esters, which are formed of montanic esters obtained by partial neutralization of montanic acid with aliphatic diols such as ethylene glycol, 1,2- or 1,3-propanediol and 1,3- or 1,4-butane diol and the above-mentioned metal; higher fatty acid amides such as stearic acid amide, palmitic acid amide, methylene-bisstearoamide and ethylenebisstearoamide; the dibenzoic acid esters of aliphatic polyols such as ethylene glycol, triethylene glycol, neopentyl glycol, pentaerythritol and polyethylene glycol; and ethers such as diphenyl ether and polyethylene glycol diglycidyl ether.

The crystallization accelerator may be added, preferably in an amount of 0.01 - 5 parts by weight based on 100 parts by weight of the crystalline polyester resin.

As the mold release agent useful in the practice of this invention, a conventionally-known mold release agent such as synthetic paraffin or cetyl alcohol is used. The mold release agent serves to improve the metal-sticking property of the crystalline polyester in a molten state thereof, thereby improving the mold release property upon injection molding and the sizing-step workability upon extrusion. The mold release agent may be added, preferably in an amount of 0.01 - 5. parts by weight based on 100 parts by weight of the crystalline polyester resin.

In the present invention, no limitation is imposed on the addition of a low-molecular material for the prevention of blocking, the acceleration of crystallization, the improvement to processability, and like purposes, on the addition of a filler and/or a reinforcing material for the modification of physical properties, or on the addition of a colorant or the like so long as their addition does not impair the objects of this invention.

The polyester resin composition of this invention can be formed or molded by any processing method which is applied to plastics. Injection molding, extrusion, vacuum forming, air-pressure forming and biaxially-stretching blow molding may be mentioned by way of example. In order to impart sufficient heat resistance to the molded article to be obtained, it is preferable to increase the degree of crystallization of the formed or molded article to about 20% or higher. As a process for achieving this degree of crystallization, it may be mentioned to reheat a pre-formed or pre-molded article to crystallize same. A routinely-usable process is however to effect both forming or molding and heat treatment simultaneously under high die or mold temperature conditions.

Use of the polyester resin composition of this invention enables formed or molded articles having high crystallinity, excellent heat resistance and superb flexibility and toughness to be provided. They can exhibit excellent advantageous effects as various heat-resistant products such as ovenable trays, various heating tools and appliances and electronic parts. Owing to the excellent formability, moldability and processability of the polyester resin composition according to this invention, it can show superb advantageous effects as complex three-dimensional molded articles such as tubular structures.

The present invention will hereinafter be described by the following Examples, in which all designations of "part" or "parts" indicate part or parts by weight. In the following Examples, each value of intrinsic viscosity [η] indicates a value obtained by dissolving the corresponding polymer in a 50:50 (by weight proportions) mixed solvent of phenol and tetrachloroethane and measuring the viscosity of the resulting solution at 25°C. In addition, "embrittlement time" is expressed in terms of heat treatment time required until a specimen in the form of a short strip of 20 mm wide broke when bent over 180°.

Examples 1 - 4 & Comparative Examples 1 - 6:

Amorphous sheets 0.5 mm thick were separately obtained by the extrusion of various polyester resin compositions, each of which had been obtained by mixing 1,3,5-tris(4'-hydroxy-3',5'-di-t-butylbenzyl)-1,3,5-triazine-2,4,6(1H,3H,5H)-trione as the phenolic antioxidant, dioctadecyl pentaerythrityl diphosphite as the phosphorus-containing antioxidant, dioctadecyl 3,3'-thiodipropionate as the sulfur-containing antioxidant and talc as the nucleating agent in the proportions shown in Table 1, with 100 parts of polyethylene terephthalate, the intrinsic viscosity [η] of which was 1.2.

The cylinder temperature and die temperature were set at 280°C, while the temperature of casting rolls was controlled at 50°C.

The thus-obtained sheets were subjected to heat
treatment at 230°C to measure their embrittlement
time.

The results are summarized in Table 1.

| | Phenolic antioxidant (part) | P-containing antioxidant (part) | S-containing antioxidant (part) | Talc (part) | Embrittlement time |
|---|---|---|---|---|---|
| Example 1 | 0.06 | 0.12 | 0.24 | - | 10 hrs. |
| Example 2 | 0.06 | 0.12 | 0.24 | 0.1 | 10 hrs. |
| Example 3 | 0.01 | 0.1 | 0.2 | - | 6 hrs. |
| Example 4 | 0.4 | 0.02 | 0.02 | - | 8 hrs. |
| Comp.Ex. 1 | - | - | - | - | 20 min.* |
| Comp.Ex. 2 | 0.002 | 0.003 | 0.004 | - | 30 min. |
| Comp.Ex. 3 | 0.3 | - | - | - | 4 hrs.* |
| Comp.Ex. 4 | - | 0.3 | - | - | 30 min. |
| Comp.Ex. 5 | - | - | 0.3 | - | 1 hr. |
| Comp.Ex. 6 | - | 0.15 | 0.15 | - | 1 hr. |

* Coloring took place.

0238140

It can be seen that the embrittlement time of the polyester compositions of this invention in Examples 1 - 4 is extremely long compared with the 100% PET system of Comparative Example 1.

Although the samples of Examples 1 - 4 were not substantially colored until their embrittlement, the sample of Comparative Example 1 underwent considerable yellowing in a short period of time. Further, the sample of Comparative Example 3 turned gray.

Examples 5 - 7:

Amorphous sheets 0.5 mm thick were separately obtained in the same manner as in Example 1 by using various compositions, each of which had been obtained by mixing tetrakis[methylene-3-(4'-hydroxy-3',5'-di-t-butylphenyl)propionate]methane as the phenolic anti-oxidant, tetrakis(2,4-di-t-butylphenyl)-4,4'-biphenylene diphosphonite as the phosphorus-containing antioxidant, and talc as the nucleating agent in their respective proportions shown in Table 2, with 100 parts of polyethylene terephthalate, the intrinsic viscosity [η] of which was 1.2.

The sheets were then subjected to heat treatment at 230°C to measure their embrittlement time. The results are summarized in Table 2.

Table 2

|  | Phenolic antioxidant (part) | P-containing antioxidant (part) | Talc (part) | Embrittlement time (hrs.) |
|---|---|---|---|---|
| Ex. 5 | 0.1 | 0.2 | 0.1 | 6 |
| Ex. 6 | 0.5 | 2.0 | 0.1 | 7 |
| Ex. 7 | 0.1 | 7.0 | 0.1 | 7 |

In Example 7, some smear was observed on the casting rolls upon extrusion and formation of the sheet.

Examples 8 - 10:

Sheets of various compositions were separately produced in the same manner as in Example 1 by adding 1,3,5-tris(3'-hydroxy-2',6'-dimethyl-4'-t-butylbenzyl)-1,3,5-triazine-2,4,6(1H,3H,5H)-trione as the phenolic antioxidant (1), tetrakis[methylene-3-(4'-hydroxy-3',5'-di-t-butylphenyl)propionate]methane as another phenolic antioxidant (2), pentaerythrityl tetrakis(3-dodecylthiopropionate) as the sulfur-containing antioxidant and talc as the nucleating agent in their respective proportions shown in Table 3, to 100 parts of polyethylene terephthalate, the intrinsic viscosity [η] of which was 0.9. Their embrittlement time was investigated at 230°C. The results are shown in Table 3.

Table 3

| | Phenolic antioxidant (1) (part) | Phenolic antioxidant (2) (part) | S-containing antioxidant (part) | Talc (part) | Embrittlement time (hrs.) |
|---|---|---|---|---|---|
| Example 8 | 0.06 | - | 0.24 | 0.1 | 10 |
| Example 9 | 0.04 | 0.02 | 0.24 | 0.1 | 10 |
| Example 10 | 0.2 | - | 0.1 | 0.1 | 9 |

Example 11:

In the same manner and under the same conditions as in Example 1, a sheet was formed by adding 0.06 part of 1,3,5-tris(3'-hydroxy-2',6'-dimethyl-4'-t-butylbenzyl)-1,3,5-triazine-2,4,6(1H,3H,5H)-trione as the phenolic antioxidant, 0.24 part of pentaerythrityl tetrakis(3-dodecylthiopropionate) as the sulfurcontaining antioxidant to 100 parts of polyethylene terephthalate, the intrinsic viscosity $[\eta]$ of which was 1.2.

The resultant sheet was heat-treated at 230°C to measure its embrittlement time, which was found to be 14 hours.

Example 12:

In the same manner and under the same conditions as in Example 1, a sheet was formed by adding 0.06 part of 1,3,5-tris(4'-hydroxy-3',5'-di-t-butylbenzyl)-1,3,5-triazine-2,4,6(1H,3H,5H)-trione as the phenolic antioxidant, 0.12 part of dioctadecyl pentaerythrityl diphosphite as the phosphorus-containing antioxidant, 0.24 part of dioctadecyl 3,3'-thiodipropionate as the sulfur-containing antioxidant and 0.1 part of talc as the nucleating agent to 100 parts of polyethylene terephthalate which was blended with 5 wt.% of low-density polyethylene (M.I. = 1.3) and had an intrinsic viscosity $[\eta]$ of 1.0.

Using the thus-obtained sheet, a tray having a diameter of 12 cm and a depth of 3 cm was formed by a vacuum/air-pressure forming process.

The sheet temperature was 140°C, the mold temperature 160°C, and the air-pressure and vacuum holding time 5 seconds each. The resultant molded article was heat-treated at 230°C for 5 hours in a hot-air drier. No deformation was observed at all and the molded article had adequate flexibility and toughness. Moreover, no coloration was observed at all.

Examples 13 - 25, Comparative Examples 7 - 9 & Referential Examples 1 - 5:

Tubular products having an internal diameter of 4 mm and an external diameter of 6 mm were separately formed by adding, to polyethylene terephthalate having an intrinsic viscosity [η] of 1.2, a nucleating agent, a crystallization accelerator, a mold release agent, and as antioxidants, a phenolic antioxidant, a phosphorus-containing antioxidant and a sulfur-containing oxidant, the kinds and amounts of which are shown in Table 4.

Extrusion was effected at 280°C. Sizing was conducted by cooling a vacuum forming die with water. Separately, crystallization was effected by causing each tubular product to pass through a 50 cm long vacuum forming die heated at 160°C immediately after the tubular product was fed through a 1 m long air furnace of 200°C. The feeding speed was controlled at 10 m/minute. Certain characteristic properties of the thus-obtained tubular products are shown in Table 5.

In Table 4, the symbols representing various additives mean the following materials:

Nucleating agents:

    A    Sodium benzoate

    B    Talc

    C    Zinc oxide

    D    Sodium stearate

Crystallization accelerators:

    E    Diphenyl ether

    F    Magnesium montanate

    G    Polyethylene glycol diglycidyl ether

Mold release agents:

    H    Cetyl alcohol

    I    Synthetic paraffin

Phenolic antioxidants:

    J    1,3,5-Tris(4'-hydroxy-3',5'-di-t-butylbenzyl)-1,3,5-triazine-2,4,6(1H,3H,5H)-trione

    K    Tetrakis[methylene 3-(4'-hydroxy-3',5'-di-t-butylphenyl)propionate]methane

Phosphorus-containing antioxidants:

L    Dioctadecyl pentaerythrityl diphosphite

M    Tetrakis(2,4-di-t-butylphenyl)-4,4'-biphenylene diphosphonite

Sulfur-containing antioxidants:

N    Pentaerythrityl tetrakis(3-dodecylthio-propionate)

O    Dioctadecyl-3,3'-thiodipropionate

Table 4

| | | Kind and amount of nucleating agent | Kind and amount of crystalliza- tion accelerator | Kind and amount of mold release agent | Kind and amount of phenolic antioxidant | Kind and amount of P-containing antioxidant | Kind and amount of S-containing antioxidant |
|---|---|---|---|---|---|---|---|
| Example | 13 | A 0.25 | E 0.35 | I 0.22<br>H 0.03 | J 0.06 | L 0.12 | N 0.24 |
| | 14 | A 0.05 | E 0.35 | I 0.25 | J 0.06 | L 0.12 | N 0.24 |
| | 15 | A 3.0 | E 0.35 | I 0.25 | J 0.06 | L 0.12 | N 0.24 |
| | 16 | A 0.25 | E 0.01 | I 0.25 | J 0.06 | L 0.12 | N 0.24 |
| | 17 | A 0.25 | E 5.0 | I 0.25 | J 0.06 | L 0.12 | N 0.24 |
| | 18 | A 0.25 | E 0.5 | I 0.01 | J 0.06 | L 0.12 | N 0.24 |
| | 19 | A 0.25 | E 0.5 | I 5 | J 0.06 | L 0.12 | N 0.24 |
| | 20 | A 0.25 | E 0.5 | I 0.25 | J 2.5 | L 1.5 | N 2.0 |
| | 21 | A 0.25 | E 0.5 | I 0.25 | J 0.02 | L 0.01 | N 0.02 |
| | 22 | A 0.25 | E 0.5 | I 0.25 | K 0.05 | M 0.20 | O 0.25 |

Note: All amounts are in terms of parts by weight based on 100 parts by weight of PET.

Table 4 (Cont'd)

| | | Kind and amount of nucleating agent | | Kind and amount of crystalliza-tion accelerator | | Kind and amount of mold release agent | | Kind and amount of phenolic antioxidant | | Kind and amount of P-containing antioxidant | | Kind and amount of S-containing antioxidant | |
|---|---|---|---|---|---|---|---|---|---|---|---|---|---|
| Example | 23 | B<br>D | 0.30<br>0.22 | F | 0.5 | H | 0.03 | K | 0.25 | L | 0.10 | N<br>O | 0.10<br>0.05 |
| | 24 | C<br>D | 0.50<br>0.05 | G<br>E | 0.2<br>0.3 | I | 0.25 | J | 0.10 | L | 0.12 | N | 0.24 |
| | 25 | A | 0.30 | E | 0.35 | I | 0.25 | J | 0.10 | 0 | | N | 0.30 |
| Comp.Ex. | 7 | 0 | | 0 | | 0 | | 0 | | 0 | | 0 | |
| | 8 | A | 0.25 | E | 0.35 | I | 0.25 | 0 | | 0 | | 0 | |
| Referential Example | 1 | 0 | | E | 0.35 | I | 0.25 | J | 0.10 | L | 0.12 | N | 0.24 |
| | 2 | A | 0.25 | 0 | | I | 0.25 | J | 0.10 | L | 0.12 | N | 0.24 |
| | 3 | A | 5 | E | 0.35 | I | 0.25 | J | 0.10 | L | 0.12 | N | 0.24 |
| | 4 | A | 0.25 | E | 7 | I | 0.25 | J | 0.10 | L | 0.12 | N | 0.24 |
| | 5 | A | 0.25 | E | 0.35 | I | 0.25 | J | 2.0 | L | 2.0 | N | 3.0 |

Note: All amounts are in terms of parts by weight based on 100 parts by weight of PET.

## Table 5

| Example | | Degree of crystallization of tubular structure (%) | Embrittlement time at 230°C | Stability in processing steps |
|---|---|---|---|---|
| | 13 | 28 | 10 hrs. | good |
| | 14 | 21 | 10 hrs. | good |
| | 15 | 34 | 9 hrs. | good |
| | 16 | 25 | 10 hrs. | relatively good |
| | 17 | 33 | 8 hrs. | good |
| | 18 | 29 | 8 hrs. | good |
| | 19 | 28 | 7 hrs. | good (slight smear in steps) |
| | 20 | 28 | 15 hrs. | good (slight smear in steps) |
| | 21 | 29 | 6 hrs. | good |
| | 22 | 29 | 8 hrs. | good |

Table 5  (Cont'd)

| | | Degree of crystallization of tubular structure (%) | Embrittlement time at 230°C | Stability in processing steps |
|---|---|---|---|---|
| Example | 23 | 28 | 8 hrs. | good |
| | 24 | 28 | 9 hrs. | good |
| | 25 | 27 | 8 hrs. | good |
| Comp.Ex. | 3 | - | - | did not pass through sizing die |
| | 4 | 27 | 20 min. | good |
| Referential Example | 1 | - | - | did not pass through sizing die |
| | 2 | - | - | did not pass through sizing die |
| | 3 | 35 | brittle product | good |
| | 4 | 28 | - | instable steps due to smear |
| | 5 | 28 | - | instable steps due to smear |

- 28 -

0238140

What is Claimed is:

1. A polyester resin composition with excellent heat resistance, comprising (A) a crystalline polyester resin, (B) a hindered phenolic antioxidant and (C) at least one antioxidant selected from phosphorus-containing antioxidants and sulfur-containing antioxidants.

2. The polyester resin composition as claimed in Claim 1, wherein the crystalline polyester resin (A) contains 1 - 20 wt.% of a polyolefin.

3. The polyester resin composition as claimed in Claim 1, wherein the polyester resin composition further contains a nucleating agent, a crystallization accelerator and a mold release agent in amounts of 0.05 - 3 parts by weight, 0.01 - 5 parts by weight and 0.01 - 5 parts by weight, respectively, based on 100 parts by weight of the polyester resin (A).

4. The polyester resin composition as claimed in Claim 1, wherein the antioxidants (B) and (C) are contained in a total amount of 0.01 - 5 parts by weight based on 100 parts by weight of the polyester resin (A).

5. The polyester resin composition as claimed in Claim 3, wherein the antioxidants (B) and (C) are contained in a total amount of 0.05 - 5 parts by weight based on 100 parts by weight of the polyester resin (A).

6. The polyester resin composition as claimed in Claim 1, 3, 4 or 5, wherein the antioxidants (B) and (C) are contained at a B/C ratio of 10/1 - 1/10.

7. The polyester resin composition as claimed in Claim 1, wherein the polyester resin (A) is polyethylene terephthalate.

8. The polyester resin composition as claimed in Claim 1, wherein the antioxidant (B) is at least one antioxidant selected from 2,2'-methylenebis(4-methyl-6-t-butylphenol), 4,4'-butylidenebis(3-methyl-6-t-butylphenol), 4,4'-thiobis(3-methyl-6-t-butylphenol), tetrakis[methylene-3-(4'-hydroxy-3',5'-di-t-butylphenyl)propionate]methane, n-octadecyl-3-(4'-hydroxy-3',5'-di-t-butylphenyl)propionate, 2,4-bisoctylthio-6-(4'-hydroxy-3',5'-di-t-butylanilino)-1,3,5-triazine, 1,3,5-tris(4'-hydroxy-3',5'-di-t-butylbenzyl)-1,3,5-triazine-2,4,6(1H,3H,5H)-trione, 1,3,5-tris(3'-hydroxy-2',6'-dimethyl-4'-t-butylbenzyl)-1,3,5-triazine-2,4,6-

(1H,3H,5H)-trione, and 1,3,5-trimethyl-2,4,6-tris(4'-hydroxy-3',5'-di-t-butylbenzyl)benzene.

9. The polyester resin composition as claimed in Claim 1, wherein the phosphorus-containing antioxidant is at least one antioxidant selected from dioctadecyl pentaerythrityl diphosphite, trioctadecyl phosphite, tris(nonylphenyl) phosphite, tris(2,4-di-t-butylphenyl) phosphite, 9,10-dihydro-9-oxa-10-phosphaphenanthrene-10-oxide, and tetrakis(2,4-di-t-butylphenyl)-4,4'-biphenylene diphosphonite.

10. The polyester resin composition as claimed in Claim 1, wherein the sulfur-containing antioxidant is at least one antioxidant selected from 3,3'-thiodipropionic acid, didodecyl-3,3'-thiodipropionate, dioctadecyl 3,3'-thiodipropionate, pentaerythrityl tetrakis(3-dodecylthiopropionate), and pentaerythrityl tetrakis(3-octadecylthiopropionate).

11. The polyester resin composition as claimed in Claim 1, wherein the antioxidant (B) is 1,3,5-tris-(4'-hydroxy-3',5'-di-t-butylbenzyl)-1,3,5-triazine-2,4,6(1H,3H,5H)-trione and the antioxidant (C) is a mixture of dioctadecyl pentaerythrityl diphosphite and dioctadecyl 3,3'-thiodipropionate.

12. The polyester resin composition as claimed in Claim 1, wherein the antioxidant (B) is 1,3,5-tris-(3'-hydroxy-2',6'-dimethyl-4'-t-butylbenzyl)-1,3,5-triazine-2,4,6(1H,3H,5H)-trione and the antioxidant (C) is pentaerythrityl tetrakis(3-dodecylthiopropionate).

13. The polyester resin composition as claimed in Claim 2, wherein the polyolefin is at least one polyolefin selected from polyethylene and copolymers of ethylene and other α-olefins.